(19) Europäisches Patentamt
European Patent Office
Office européen des brevets

(11) EP 2 261 761 A1

(12) EUROPEAN PATENT APPLICATION

(43) Date of publication:
**15.12.2010 Bulletin 2010/50**

(51) Int Cl.:
***G05B 17/02*** *(2006.01)* ***G05B 23/02*** *(2006.01)*

(21) Application number: **09251554.3**

(22) Date of filing: **12.06.2009**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(71) Applicant: **BAE Systems PLC**
**Farnborough Aerospace Centre**
**Farnborough**
**Hampshire GU14 6YU (GB)**

(72) Inventor: **The designation of the inventor has not yet been filed**

(74) Representative: **Jones, Ithel Rhys et al**
**Wynne-Jones, Lainé & James LLP**
**Essex Place**
**22 Rodney Road**
**Cheltenham**
**Gloucestershire GL50 1JJ (GB)**

# (54) Assisting failure mode and effects analysis of a system

(57) A method of assisting with failure mode and effects analysis of a system, the method including obtaining data describing a set of symptoms (210) and a set of faults (212), and symptom-fault association data (216) describing which of the symptoms are indicative of which of the faults. The method also obtains data describing a set of measurements (208), and measurement-symptom association data (214) describing which of the measurements detect which of the symptoms. User input representing a selection (404, 408) of at least one of the faults and/or at least one of the measurements is received and a graphical display (410, 412) is generated that represents a relationship between the selected fault(s) and at least one of the symptoms associated with the selected fault(s) and/or a relationship between the selected measurement(s) and at least one of the symptoms associated with the selected measurement(s).

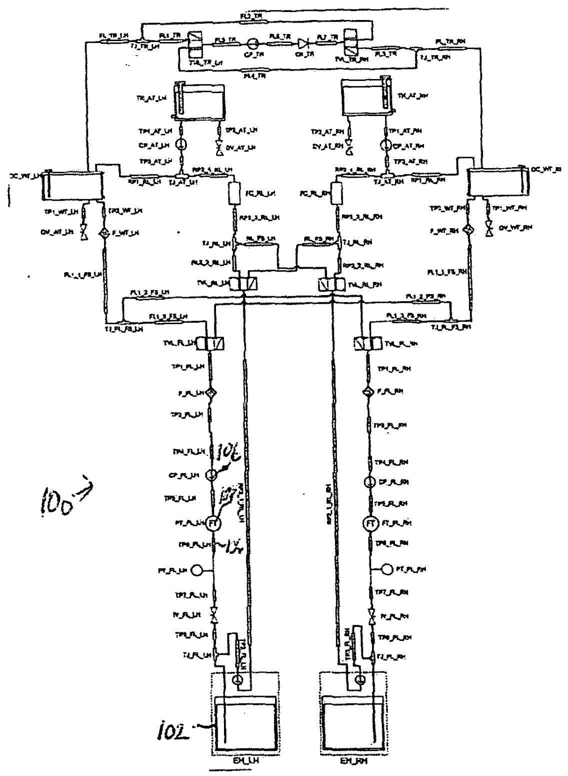


FIG.1

EP 2 261 761 A1

## Description

The present invention relates to assisting failure mode and effects analysis of a system.

Failure mode and effects analysis is a technique that is used to create a fault-symptom model that can be used to identify the most likely faults in a system using data about the known symptoms and their relationships to known failures. Expert system diagnostic applications (e.g. ones based on probabilistic Bayesian networks) can then use the model to identify the likely cause, given information about the symptoms.

Whilst such diagnostic systems can give an indication of what faults should be investigated in order to repair a malfunctioning system, they do not assist users/engineers with fully appreciating the relationships between the symptoms and faults, or sensor measurements and the observed symptoms. Understanding these relationships can be useful for many reasons, including helping to decide whether any sensors are redundant/less useful than others, which can assist with improving system design for diagnostic purposes.

Embodiments of the present invention are intended to address at least some of the issues discussed above.

According to a first aspect of the present invention there is provided a method of assisting with failure mode and effects analysis of a system, the method including:

> obtaining data describing a set of symptoms and a set of faults, and symptom-fault association data describing which of the symptoms are indicative of which of the faults;
> obtaining data describing a set of measurements, and measurement-symptom association data describing which of the measurements detect which of the symptoms;
> receiving user input representing a selection of at least one of the faults and/or at least one of the measurements, and generating a graphical display representing a relationship between the selected fault(s) and at least one of the symptoms associated with the selected fault(s) and/or a relationship between the selected measurement(s) and at least one of the symptoms associated with the selected measurement(s).

The step of generating a graphical display representing a relationship between the selected measurement(s) and at least one of the symptoms associated with the selected measurement(s) may include:

> generating and displaying a two-dimensional measurement-symptom matrix, wherein each row of the matrix corresponds to one of the measurements and each column of the matrix corresponds to one of the symptoms (or vice versa), and wherein each element of the measurement-symptom matrix indicates a state representing whether that measurement is associated with that symptom according to the measurement-symptom association data.

The state of the measurement-symptom matrix element may be represented in the measurement-symptom matrix by a predefined colour or symbol.

The step of generating a graphical display representing a relationship between the selected measurement(s) and at least one of the symptoms associated with the selected measurement(s) may include:

> generating and displaying a graphical element that represents whether all the measurements needed to detect a particular one of the symptoms are included in the selected measurement(s).

At least one of the symptoms in the graphical element may be aligned with the row (or column) corresponding to that symptom in the measurement-symptom matrix.

The method may include generating and displaying a diagonal version of the measurement-symptom matrix wherein a majority of the matrix elements having a state representing that that element's measurement is associated with a said symptom according to the measurement-symptom association data are positioned adjacent a notional line running between corners of the matrix. The notional line will typically run between an origin (0, 0) cell and a maximum row, maximum column cell of the measurement-symptom matrix.

The step of generating a graphical display representing a relationship between the selected fault(s) and at least one of the symptoms associated with the selected fault(s) may include:

> generating and displaying a two-dimensional matrix, wherein each row of the matrix corresponds to one of the faults and each column of the matrix corresponds to one of the symptoms (or vice versa), and wherein each fault-symptom element of the matrix indicates a state representing whether that fault is associated with that symptom according to the symptom-fault association data.

The state of the fault-symptom element may be represented by a predefined colour or symbol.

The method may include generating and displaying a diagonal version of the fault-symptom matrix wherein a majority of the matrix elements having a state representing that that fault's measurement is associated with a said symptom according to the fault-symptom association data are positioned adjacent a notional line running between corners of the matrix. The notional line will typically run between an origin (0, 0) cell and a maximum row, maximum column cell of the fault-symptom matrix.

The method may include:

displaying items representing at least some of the faults; and/or
displaying items representing at least some of the measurements, and
using the displayed items to generate the user input.

The displayed items may be displayed in a form of a list or lists, wherein at least one of the entries in the list or lists shows a name/description of the fault or the measurement.

The method may further include a step of searching for at least one of the measurements that are associated, via the symptoms, with at least one of the faults. The method may include a step of searching for a combination of the (selected) measurements that are associated, via the symptoms, with a maximum number of the faults, compared with other combinations of the measurements. The method may further include displaying the combination of measurements found by the search and this display may highlight the measurements and associated faults/symptoms in the matrices.

According to yet another aspect of the present invention there is provided a computer program product comprising a computer readable medium, having thereon computer program code means, when the program code is loaded, to make the computer execute a method of assisting with failure mode and effects analysis of a system substantially as described herein.

According to another aspect of the present invention there is provided apparatus configured to assist with failure mode and effects analysis of a system, the apparatus including:

a device configured to obtain data describing a set of symptoms and a set of faults, and symptom-fault association data describing which of the symptoms are indicative of which of the faults;
a device configured to obtain data describing a set of measurements, and measurement-symptom association data describing which of the measurements detect which of the symptoms;
an input device configured to receive user input representing a selection of at least one of the faults and/or at least one of the measurements, and
a display device configured to generate a graphical display representing a relationship between the selected fault (s) and at least one of the symptoms associated with the selected fault(s) and/or a relationship between the selected measurement(s) and at least one of the symptoms associated with the selected measurement(s).

According to yet another aspect of the present invention there is provided a method of searching for a combination of measurements from a set of measurements associated with a set of related symptoms and faults, the method including searching for a combination of the measurements that are associated, via the symptoms, with a maximum, or predetermined, number of the faults, compared with other, different combinations of the measurements.

According to a further aspect of the present invention there is provided a method of producing a diagonal form of a rectangular matrix, the method including swapping rows and columns of the rectangular matrix so as to reduce an overall distance of specific cells from a notional diagonal line running through the rectangular matrix.

Whilst the invention has been described above, it extends to any inventive combination of features set out above or in the following description. Although illustrative embodiments of the invention are described in detail herein with reference to the accompanying drawings, it is to be understood that the invention is not limited to these precise embodiments. As such, many modifications and variations will be apparent to practitioners skilled in the art. Furthermore, it is contemplated that a particular feature described either individually or as part of an embodiment can be combined with other individually described features, or parts of other embodiments, even if the other features and embodiments make no mention of the particular feature. Thus, the invention extends to such specific combinations not already described.

The invention may be performed in various ways, and, by way of example only, embodiments thereof will now be described, reference being made to the accompanying drawings in which:

Figure 1 is a schematic illustration of components of an aircraft fuel system;
Figure 2 is a schematic illustration of a computing device configured to execute a diagnostic assistance application;
Figure 3 illustrates a screen display generated by a diagnosis runtime simulator executing on a computing device;
Figure 4 is a first example screen display generated by the diagnostic assistance application;
Figure 5 details matrices similar to those included in the screen display of Figure 4, and
Figures 6A and 6B illustrate a matrix being converted into a diagonal form, and

Figures 7 to 12 are further example screen displays generated by the diagnostic assistance application.

Figure 1 shows a schematic illustration of an aircraft fuel system 100 that includes a plurality of components, such as tanks 102, pipes 104, valves 106, flow meters 108, pressure meters 110, and so on. Some of the components, such as the flow meters 108, are capable of measuring properties of the system. It will be understood that the system shown is exemplary only and that the application described herein can be used with any type of system that can be modelled in a suitable manner.

In accordance with known techniques, a database of information regarding the system components and their associations can be created. This can produce a fault-symptom model, which may be at least partially based on case studies, etc, where observations that have shown that if certain symptoms are detected at certain components then a specific type of fault is likely to lie in one or more specific component of the system. Such techniques are well-known and need not be described in detail herein.

Figure 2 shows schematically a computing device 200, which may be a conventional desktop computer, which includes a processor 201 and memory 202. The computing device 200 is connected to a display 204, which can be any suitable technology, e.g. LCD, LED, etc, as well as at least one user interface/input device (not shown), including, but not limited to, a keyboard, mouse, touch-screen, etc.

The memory 202 includes an application 206 for assisting with failure mode and effects analysis in the form of executable code. The memory also includes data that can be used by the application 206, including data describing sets of measurements 208, symptoms 210 and faults 212, along with further data 214 describing associations between at least some of the measurements and the symptoms (e.g. flow meter number 10A can provide a measurement of flow through pipe 11A, etc) and data 216 describing associations between at least some of the symptoms and the faults (e.g. if flow measurement provided by meter 10A is "low" then this indicates that the fault may be a blockage in pipe 11 A, etc). Such relationship data may be generated automatically or be derived from observational information. It will be understood that such data can be represented in many different ways by various types of data structures, etc, and need not be in separate files.

The application 206 generates a graphical display representing relationships between the system's measurements, symptoms and faults. This can help with FMEA analysis and also has other applications, such as assisting with selecting which measurements are most useful in the system. The latter possibility can mean that less useful sensors/ measurements can be removed from the system, thereby improving efficiency and reducing costs. The application can also enable a designer to assess which additional sensors could be added to the system and/or whether measuring different sensor information would result in improved fault diagnosis.

Figure 3 illustrates a screen display generated by a diagnosis runtime simulator, which can be part of the diagnostic assistance application 206, or a separate application. This can allow a user/engineer to insert faults and exercise the system the using a simulation engine, as well as selecting which observations are made available to the diagnostic system prior to (or in parallel with) running the application 206. The symptom set can then be evaluated and fault candidates can be ranked according to the number of symptoms indicating each fault.

The symptom set is evaluated and fault candidates can be ranked according to the number of symptoms indicating each fault. The input configuration and specified fault (e.g. right hand blocked fuel supply pipe) are seen in the upper scrollable selection list 302 of Figure 3 for a twin engine aircraft fuel system. The values determined by the simulation are in the middle section 304, together with the functions 306 achieved. The functions are derived from a functional model of the system that is used in the generation of the symptoms as well as to provide interpretation of the behaviour for presentation to an engineer in an FMEA output. They are not normally used in the evaluation of the symptoms and are only shown in the interface to allow easy recognition of the overall effect of the fault to the user. The lower part 308 of the display shows the results of the diagnosis. All of the valid symptoms are on the left. The symptoms are all negatable and a check in the I/E column indicates that the symptom is to be observed in the simulation and can therefore indicate a set of faults. If there is no check in the I/E column then the symptom will exonerate its associated faults. The fault set is shown for the selected symptom in the Faults column 310. The column 312 on the right provides the total number of symptoms indicating and exonerating each fault in parenthesis and the overall score calculated by subtracting the number of exonerating symptoms from the number of positive symptom indications for each fault. In the example there are nine top-ranking faults and these are in fact indistinguishable from the sensing available. Further down the list 312 faults may have negative scores, showing that there is evidence from the symptoms that those faults are not present.

The engineer can select or deselect any sensor using list 302 and the effect on the diagnosis is shown substantially instantaneously. This is useful for checking the applicability of specific measurements in specific fault scenarios; however, it is not sufficient to allow an engineer to make a sensor selection for the system due to the number of possible opening modes and faults. The application 206 can assist with this issue and in the example implementation is opened/ accessed by clicking on the "Open diagnosability window" button 314 shown in the screen display of Figure 3.

Figure 4 shows a first example screen display that is generated by the application 206 on the display device 204. It will be understood that the style and format of the display is exemplary and that in alternative embodiments of the present invention certain features may be omitted/added and/or presented in a different manner. The display includes a list 402 of measurements based on the data set 208. In the example, all of the measurements in the set are presented in a scrollable list including names/descriptions of the measurements based on the data set, but it will be understood that variations are possible, e.g. the measurements could be presented on a schematic diagram of (part of) the system, individual measurements could be displayed by searching, etc. Adjacent each measurement visible in the list is a tick box, e.g. 404. The display also includes a similar scrollable list 406 of the faults (based on data set 212), each fault having an associated tick box, e.g. 408, but, again, it will be understood that the presentation of the faults can be varied, and need not be the same as the presentation of the list of measurements.

At the upper left-hand corner of the example display there is a measurement-symptom matrix 410 and at the lower left-hand corner there is a symptom-fault matrix 412. It will be understood that graphical displays other than the example matrices can be used to show the relationships, e.g. Venn-diagram type displays. Figure 5 shows two matrices in more detail that illustrate the functionality of the matrices 410, 412. The relationship between observations (sensor measurements), symptoms and faults can be represented using the two two-dimensional matrices detailed in Figure 5. The relationships can be defined by the data sets 214, 216. A colour coding system can be used to indicate the status of each element, although it will be understood that variations are possible, e.g. using symbols or wording instead of predefined colours. In one embodiment, cells coloured green (labelled 502 in the Figure) indicate that the items are available, that is, in the case of a measurement, the corresponding sensor is available to take a measurement; in the case of a symptom that the symptom is observed; and in the case of a fault that the fault has been detected (i.e. the relevant symptoms have been detected).

Once a measurement is made available any corresponding symptoms that have all the necessary information to be evaluated also turn green in matrix 410, together with any faults that can be diagnosed in matrix 412. This can be achieved by analysing the relationships defined in the data sets 214, 216. If a measurement is to be excluded then it will be coloured red in matrix 410 (cells labelled 504 in the Figure) and any symptoms and faults that therefore cannot be diagnosed also turn red in matrix 412. It should be noted that it is necessary for all symptoms that can diagnose a fault to be excluded before the fault is not diagnosable. Elements that are undecided are coloured grey (labelled 506). These comprise measurements that are not either chosen or excluded; symptoms that require undecided measurements and do not include excluded measurements, and faults that could still be diagnosed if additional symptoms (measurements) are selected.

By selecting and unselecting measurements at any point in the measurement selection process it is easy to find out which (additional) measurements are significant in the context of the currently available measurements. Returning to Figure 4, the application 206 also allows the user to view the details of any item by hovering over the cell in matrix 410 or 412, as shown at 418. In the example embodiment, another colour, e.g. orange, can be used as an additional colour that indicates items that are currently being selected by the user, prior to being included or excluded. This can make it easier to visualise changes to the diagnostic system that will be caused by the inclusion of measurements. Patterns in the matrices graphically illustrate some characteristics of the diagnostic system:

- Highly populated rows in the measurement-symptom matrix show measurements that participate in may symptoms and are therefore important to the diagnostic system.
- Similar patterns existing in more than one row of the measurement-symptom indicates that there are several measurements that are required as a set, for a given a set of symptoms.
- Highly populated columns in the measurement-symptom matrix indicate symptoms that require many measurements. In practice this does not occur often because the symptoms are generated to be as simple as possible. Inputs such as valve positions and switches that affect major system state typically have this characteristic.
- Highly populated columns in the fault-symptom matrix indicate symptoms that can diagnose many faults.
- Similar patterns in several fault-symptom columns show that there may be a choice of symptoms that diagnose the same set of faults.

In Figure 4, it can be seen that each matrix provides one group of symptoms and faults, and that there is a common group of faults diagnosed by either set of measurements. The statistics are the top of the window indicate 3 out of 23 measurements are chosen and can diagnose 80 out of 184 possible faults; however, these are not the faults being selected (i.e. coloured orange) but the (green) previously-selected items visible in the measurement list 402, 404.

The central "bar" 413 in Figure 4 (and Figure 5 discussed below) is a graphical element that represents whether all the measurements needed to detect a particular one of the symptoms are included in the selected measurement(s). Again, this can be colour-coded in a similar manner to the cells of the matrices and it will be understood that the bar 413 is only one example of how this information can be displayed and that variations are possible, e.g. a text-based list or a Venn-diagram type display.

To gain a better understanding of the relationships contained within the matrices a diagonal form can be generated for either matrix 410, 412 that attempts to place all the matrix elements as close to the diagonal as possible. This is implemented by swapping entire rows and columns so as to reduce the overall distance of the elements from the diagonal. Once the chosen matrix is in diagonal form the unshared axis of the other matrix is sorted to make it as diagonal as possible. The result is that related elements will appear together either all the measurements that are associated with a specific symptom or all the faults that are associated with a given symptom. The aim is to assist in the selection or removal of measurement and therefore any elements that are already decided are not included in the process and are moved to the bottom or right of the matrix (this is why the diagonal line does not extend to the corner of some of the matrices shown in some of the example screen displays).

The aim of the matrix diagonalisation is to visually group related measurements and symptoms (or symptoms and indicated faults). The matrices will, in general, be rectangular because the number of measurements, faults and symptoms is unequal and therefore a true diagonal matrix as commonly understood in mathematics is not possible. However, steps can be performed that produce an approximation by swapping rows and columns (i.e. the order of the items in the measurement and symptom lists) to produce a matrix where the majority of the active cells are near an imaginary line between the (0,0) and (max Row, max Column) matrix elements.

The concept of a row (or column) "weight" can be used to describe the number of cells to either side of the imaginary diagonal line across the matrix.

Figure 6A shows an example 6 by 4 matrix. The "mid point" of rows 1 and 2 are shown by circles 601 and 602, respectively. The "weight" of each row is calculated as the sum of the distance (as a cell count) of each active cell (shown grey in Figues 6A and 6B) from the mid point. In the example row 1 has a weight of 2/3 and row 2 has a weight of -11/3. The aim of the algorithm is to swap rows (and columns) to produce the smallest weights. By extension, the columns can be similarly considered.

If the "imbalance" of two rows is defined as:

$$\text{weight of row } n - \text{the weight of row } n{+}1$$

then the rows are swapped if the imbalance is greater than zero unless the result of swapping the rows creates a larger imbalance for the rows.

In the example the imbalance is 2/3 - (-11/3) = 13/3. This is greater than zero and therefore the rows are swapped to produce the matrix shown in Figure 6B, in which the imbalance is -1/3 - (-9/3) = 8/3. Since 8/3 is less than 11/3 the reordered matrix is considered closer to diagonal than the original and the swap is retained. A similar procedure is then carried out between rows 2 and 3, and so on. The overall effect of the swap is simply to reorder the lists of measurements and/or faults and/or symptoms. Either the measurement/symptom or the symptom/fault matrix can be diagonalised at any one time, since reordering the symptoms in one matrix will affect the other, thus destroying its diagonal form.

Each pair of rows are repeatedly considered in the manner of the known "bubble sort" algorithm (although it will be appreciated that other sorting routines could be used), using the weight measure as the ordering criterion. However, in contrast to a standard sort the weight of a row changes (and is therefore recalculated) when it is moved. The sort is undertaken alternately on rows and columns. Once each pair of row and column sorts is completed the total imbalance of the entire matrix is calculated as the imbalance sum of all rows plus the imbalance sum of all columns. The alternate sorting of rows and columns continues until no further reduction in the total matrix imbalance can be achieved. At this point the "majority" of the weight of the matrix is balanced around the diagonal as closely as possible. This has the effect of bringing related measurements and symptoms (or symptoms and faults) together on the diagonal and allows the user/ engineer further insight to the diagnostic capability of the system.

Only the available measurements/symptoms/faults are included in the diagonalisation (those that are not selected (displayed as green) or excluded (displayed as red in the example)) to highlight the relationships amongst the unknown items. The remainder of the elements are moved to the highest value indices so that they remain visible in the matrix, as in the example matrix 410 of Figure 8 discussed below, where the certain symptoms are not considered, allowing the un-diagnosed faults (rows) to be associated with specific symptom groups (columns).

Turning to Figure 7, the onscreen user interface further includes an upper "Order" button 702 that toggles the measurement-symptom matrix 410 between diagonalised and non-diagonalised forms. The interface further includes an "Include" button 704 and an "Exclude" button 706, which specify whether the set of measurements selected in the "Measurement selection information" area at the bottom of the display are made available or excluded, as discussed below.. Also provided are a "Select all" button 708 and a "Clear all" button 710, which check and un-check, respectively, all of the tick boxes in the Measurement list 402. The interface further includes a "Scale" selection box 712, which adjusts the resolution/magnification of the matrices 410, 412. There is also a lower "Order" button 714, which toggles the symptom-fault matrix 412 between diagonalised and non-diagonalised forms. The <Clear> button 716 removes any items that are selected in the "Measurement selection information" area discussed below.

An example of usage of the application 206 will now be described, making reference to the aircraft fuel system example of Figure 1. From Figure 7, it will be apparent to the skilled user/engineer that for this system most measurements are needed in several symptoms because of the "horizontal bars" in the matrices. If the user/engineer knows that the measurements from the flow meters are definitely available to the diagnostic system, then this can be selected in the list 402 by checking boxes 404' and 404" (resulting in the appropriate cells in matrix 410 turning green). However, it can be seen that these measurements alone are not enough to diagnose any fault (see summary at the top of the window).

The pump control values are also known and can also be selected, using check boxes 404"', 404"" in Figure 8. It can then be seen that these observations are part of a superset of the flow values and so the user may appreciate that it might be better to use them as a starting point instead of the flow meters. The flow meter measurements could be deselected, but this might lead to un-diagnosable faults. In use, none of the cells in the symptom-fault matrix 412 turn red when the flow meter measurements are de-selected, which indicates that no faults are precluded by not using the flow meter measurements, i.e. there is always an alternative symptom available.

The application 206 can perform an exhaustive search for the next best measurements to select that provide the maximum number of fault detections. In the example, this search is initiated by entering the number of measurements to be considered in box 802 and selecting the "Find best" button 804. The application then calculates how many combinations must be considered for a given number of additional measurements. In the example of Figure 9 these are as follows:

- 1 = 21
- 2 = 210 (as selected in the example of Figure 9)
- 3 =1330
- 4 = 5985
- 5 = 20349
- 6 = 54264
- 7 =116280
- 10 = 352716

The interface presents the user with the n "next best" measurements. These are the n measurements that produce the ability to diagnose the maximum number of additional faults. In the example application, the algorithm is a simple brute force search. The standard combinatory formula applies and therefore it requires $r!/n(r!-n)$ measurement combinations to be considered where n is the size of the set of measurements to consider and r is the number of available measurements remaining. This can be used to give the user an estimation of how long the search will take.

Every combination of n the remaining measurements is generated using a recursive method that selects measurements from the remaining available measurements at each level, removes the measurement from the available list and recurse until n measurements are selected. However, any method (e.g. ones known from the field of combinatorics) can be used for generating all combinations of n measurements.

For each set of measurements the symptom set is checked for any additional symptoms that have all required measurements and any additional faults that are available with the set of measurements. The sets of n measurements that produce the maximum number of additional faults (termed "best" measurements) are presented to the user as a list of all of the measurements involved in the "best" sets. Often several sets of measurements will diagnose the same faults and so the measurement sets can be grouped by the sets of faults they diagnose. Each of the measurement sets is listed and any measurement sets that are a superset of the best measurements using fewer measurements can be highlighted, e.g. in a lighter font. This distinguishes measurement sets that can be produced by adding measurements in sequence using the "best" criterion from those where allowing more measurements opens up a different set of measurements (usually for a different aspect or function of the system).

The user is able to select the sets of measurements from the lists shown in box 902 and can immediately see the affected measurements, symptoms and faults highlighted in (e.g. yellow) on the matrices 410, 412 and the lists 402, 406. These can then be selected or rejected as required. The user can click on one of the sets of measurements in these highlighted portions, followed by the "Include" or "Exclude" button 704, 706 to select them, removing the need for the user to find and select the corresponding check boxes in list 402, for example. The <Clear> button 716 can be used to remove any items that are selected in the "Measurement selection information" area. In other words, this option removes any highlighted items if the user clicked on them, but decided not to include or exclude them, thereby allowing the effect of additional measurements to be displayed.

It is possible to include features other than simply the number of faults diagnosed in the definition of "best measurements", e.g. the ability of the diagnostic system to isolate faults based on the number of different sets and intersections of sets of faults diagnosed by each symptom. Weighting of measurements and/or faults according to physical features such as cost, accessibility or severity is also possible where such data can be obtained, and will result in modified orderings and selections.

It can be seen by the "Best 1 measurements provided an additional 6 faults" message 903 in area 902 that by adding one additional measurement six faults can be detected (e.g. the left pressure sensor detects 6 blockage faults in the left system and the right pressure sensor detects 6 blockage faults in the right system). However, a message in area 902 indicates that it also possible to detect 80 faults by adding two measurements. Selecting on the "Total 6 measurements" message 905 expands it to display all measurements involved in any pairs that provide these 80 faults, as shown in Figure 10.

The skilled user will appreciate that there are two groups of faults that can be detected (left and right variants). Considering the first set of faults, it will be apparent that the measurement is the flow meter measurement (so it is needed for efficient diagnosis), plus either of the left flow or return valves. An engineer would know that both valves are, in fact, mechanically slaved and so the measurements are equivalent, save for a mechanical linkage failure. If it is known that the flow valve is most closely connected to the actuator and return valve slaved to it then this is the one to choose. Thus, the flow left and right meters and flow valves are selected (by clicking on the "Measurement combination 1" and "Measurement combination 2" shown shaded in Figure 10 and then clicking the "Include" button 704, or by clicking on the required check boxes 404 in the measurement selection list 402) as it is pointless to diagnose only left or right systems. When this is done, it can be seen at the top of the resulting window shown in Figure 11 that 116 of the 184 faults are now diagnosable, and many more faults are shown as diagnosable (green) in the lower matrix 412 and list 406 when this is displayed, as shown in Figure 12.

The skilled user/engineer can continue this process of selecting measurements and reviewing the resulting symptom/fault displays until an optimal selection of measurements is made, ideally one that results in all faults being diagnosable with no fault being un-diagnosable using a minimal number of measurements.

## Claims

**1.** A method of assisting with failure mode and effects analysis of a system, the method including:

obtaining data describing a set of symptoms (210) and a set of faults (212), and symptom-fault association data (216) describing which of the symptoms are indicative of which of the faults;
obtaining data describing a set of measurements (208), and measurement-symptom association data (214) describing which of the measurements detect which of the symptoms;
receiving user input representing a selection (404, 408) of at least one of the faults and/or at least one of the measurements, and
generating a graphical display (410, 412) representing a relationship between the selected fault(s) and at least one of the symptoms associated with the selected fault(s) and/or a relationship between the selected measurement(s) and at least one of the symptoms associated with the selected measurement(s).

**2.** A method according to claim 1, wherein the step of generating a graphical display representing a relationship between the selected measurement(s) and at least one of the symptoms associated with the selected measurement(s) includes:

generating and displaying a two-dimensional measurement-symptom matrix (410), wherein each row of the matrix corresponds to one of the measurements and each column of the matrix corresponds to one of the symptoms (or vice versa), and wherein each element of the measurement-symptom matrix indicates a state representing whether that measurement is associated with that symptom according to the measurement-symptom association data.

**3.** A method according to claim 2, wherein the state of the measurement-symptom matrix (410) element is represented in the measurement-symptom matrix by a predefined colour or symbol.

**4.** A method according to any one of the preceding claims, wherein the step of generating a graphical display representing a relationship between the selected measurement(s) and at least one of the symptoms associated with the selected measurement(s) includes generating and displaying a graphical element (413) that represents whether all the measurements needed to detect a particular one of the symptoms are included in the selected measurement(s).

**5.** A method according to claim 4, when dependent upon one of claims 2 to 3, wherein at least one of the symptoms in the graphical element (413) is aligned with the row (or column) corresponding to that symptom in the measurement-symptom matrix (410).

**6.** A method according to any one of claims 2 to 5, including generating and displaying a diagonal version of the measurement-symptom matrix (410) wherein a majority of the matrix elements having a state representing that that element's measurement is associated with a said symptom according to the measurement-symptom association data are positioned adjacent a notional line running between corners of the matrix.

**7.** A method according to any one of claims 2 to 6, wherein the step of generating a graphical display representing a relationship between the selected fault(s) and at least one of the symptoms associated with the selected fault(s) includes generating and displaying a two-dimensional symptom-fault matrix (412), wherein each row of the symptom-fault matrix corresponds to one of the faults and each column of the symptom-fault matrix corresponds to one of the symptoms (or vice versa), and wherein each symptom-fault element of the symptom-fault matrix indicates a state representing whether that fault is associated with that symptom according to the symptom-fault association data.

**8.** A method according to claim 7, further including generating and displaying a diagonal version of the fault-symptom matrix (412) wherein a majority of the matrix elements having a state representing that that fault's measurement is associated with a said symptom according.to the fault-symptom association data are positioned adjacent a notional line running between corners of the matrix.

**9.** A method according to any one of the preceding claims, further including:

displaying items (406) representing at least some of the faults; and/or
displaying items (402) representing at least some of the measurements, and
using the displayed items to generate the user input.

**10.** A method according to claim 9, wherein the displayed items are displayed in a form of a list or lists (406, 402), wherein at least one of the entries in the list or lists shows a name/description of the fault or the measurement.

**11.** A method according to any one of the preceding claims, further including a step of searching for at least one of the measurements (208) that are associated, via the symptoms (210), with at least one of the faults (212).

**12.** A method according to claim 11, including a step of searching for a combination of the selected measurements (208) that are associated, via the symptoms (210), with a maximum number of the faults (212), compared with other combinations of the measurements.

**13.** A method according to claim 11 or 12, when dependent upon claim 7, further including displaying the combination of measurements found by the search and highlighting the found measurements (208) and associated said faults (212)/symptoms (210) in the measurement-symptom/symptom-fault matrix (410,412).

**14.** A computer program product comprising a computer readable medium, having thereon computer program code means, when the program code is loaded, to make the computer execute a method of assisting with failure mode and effects analysis of a system according to any one of claims 1 to 13.

**15.** Apparatus (200) configured to assist with failure mode and effects analysis of a system, the apparatus including:

a device (201) configured to obtain data describing a set of symptoms (210) and a set of faults (212), and symptom-fault association data (216) describing which of the symptoms are indicative of which of the faults;
a device (201) configured to obtain data describing a set of measurements (208), and measurement-symptom association data (214) describing which of the measurements detect which of the symptoms;
an input device (200) configured to receive user input representing a selection (404, 408) of at least one of the faults and/or at least one of the measurements, and
a display device (204) configured to generate a graphical display (410, 412) representing a relationship between the selected fault(s) and at least one of the symptoms associated with the selected fault(s) and/or a relationship between the selected measurement(s) and at least one of the symptoms associated with the selected measurement(s).

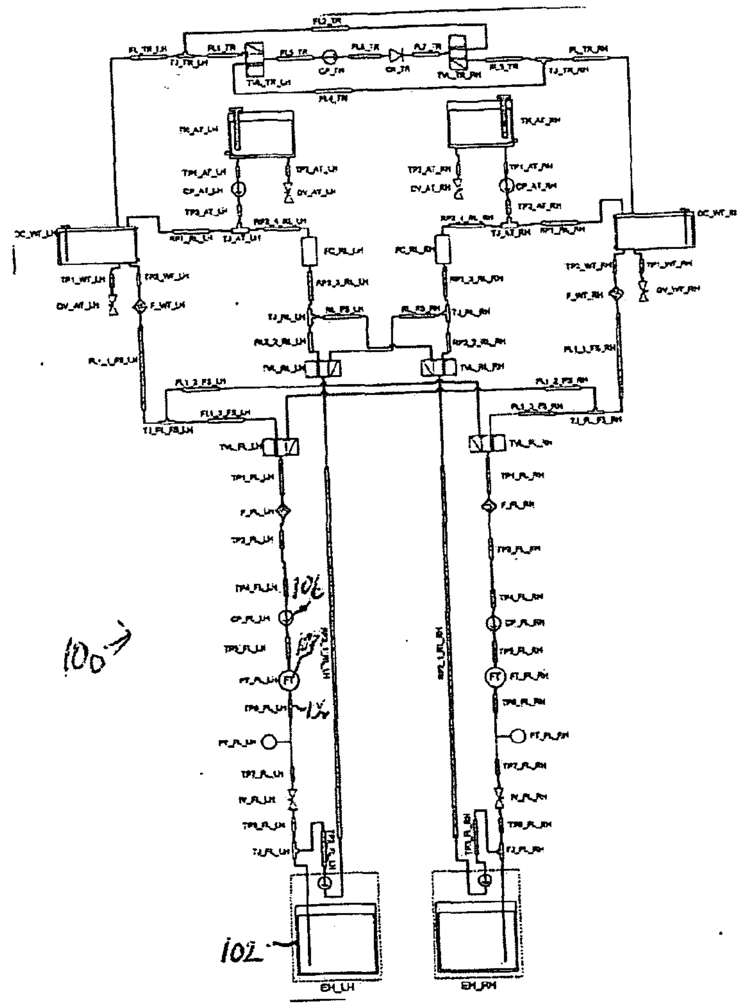


FIG. 1

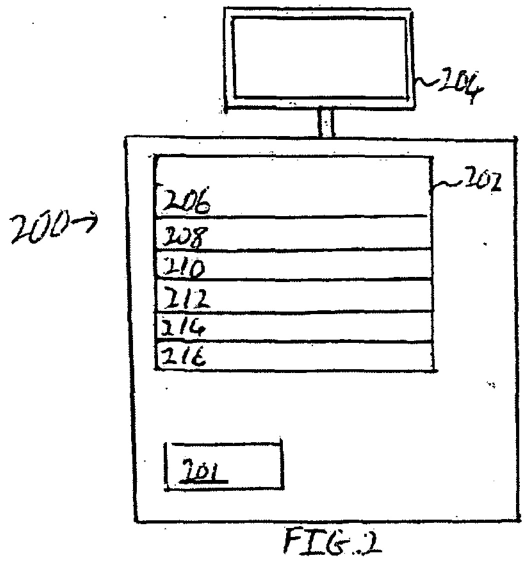


FIG. 2

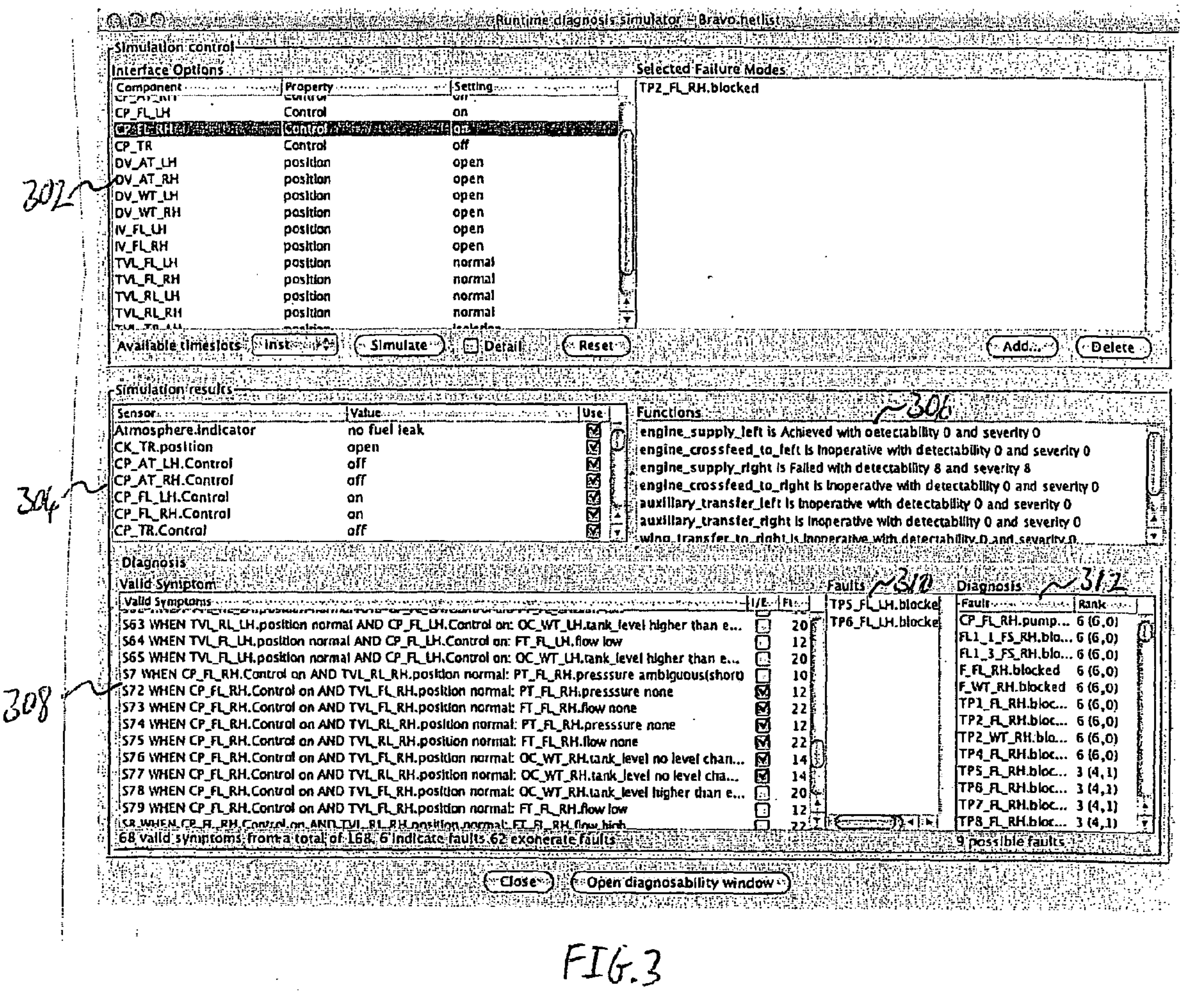
Runtime diagnosis simulator – Bravo.netlist
Simulation control
Interface Options
Selected Failure Modes
TP2_FL_RH.blocked
Available timeslots
Simulate
Detail
Reset
Add...
Delete
Simulation results
Functions
Diagnosis
Valid Symptom
Faults
68 valid symptoms from a total of 168. 6 indicate faults 62 exonerate faults
9 possible faults
Close
Open diagnosability window
302
304
306
308
310
312

FIG.3

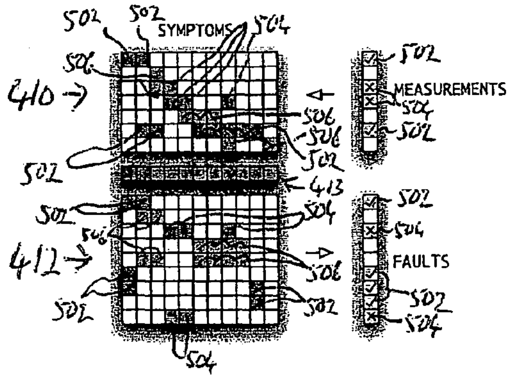
SYMPTOMS
MEASUREMENTS
FAULTS
502
504
506
410
412
413

FIG.5

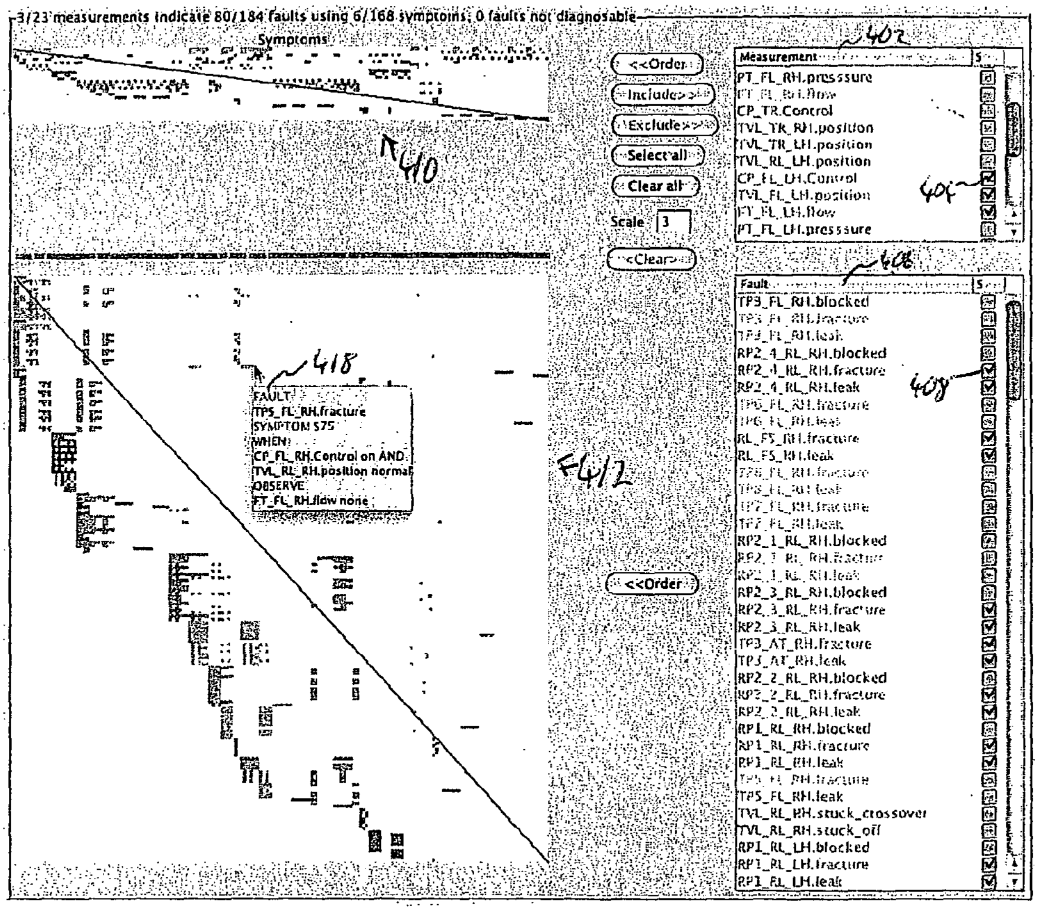


FIG.4

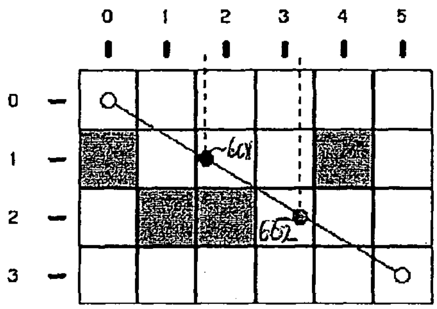


● MidPoint of row 1 = 1*5/3 = 5/3

Weight of row 1 = 0-5/3 + 4-5/3 = -5/3 + 7/3 = 2/3

◍ MidPoint of row 1 = 2*5/3 = 10/3

Weight of row 2 = 1-10/3 + 2-10/3 = -7/3 + -4/3 = -11/3

FIG. 6A

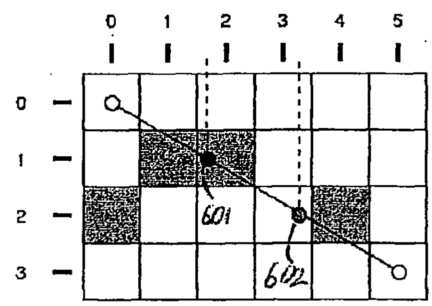


● MidPoint of row 1 = 1*5/3 = 5/3

Weight of row 1 = 1-5/3 + 2-5/3 = -2/3 + 1/3 = -1/3

◍ MidPoint of row 1 = 2*5/3 = 10/3

Weight of row 2 = 0-10/3 + 4-10/3 = -10/3 + 2/3 = -9/3

FIG. 6B

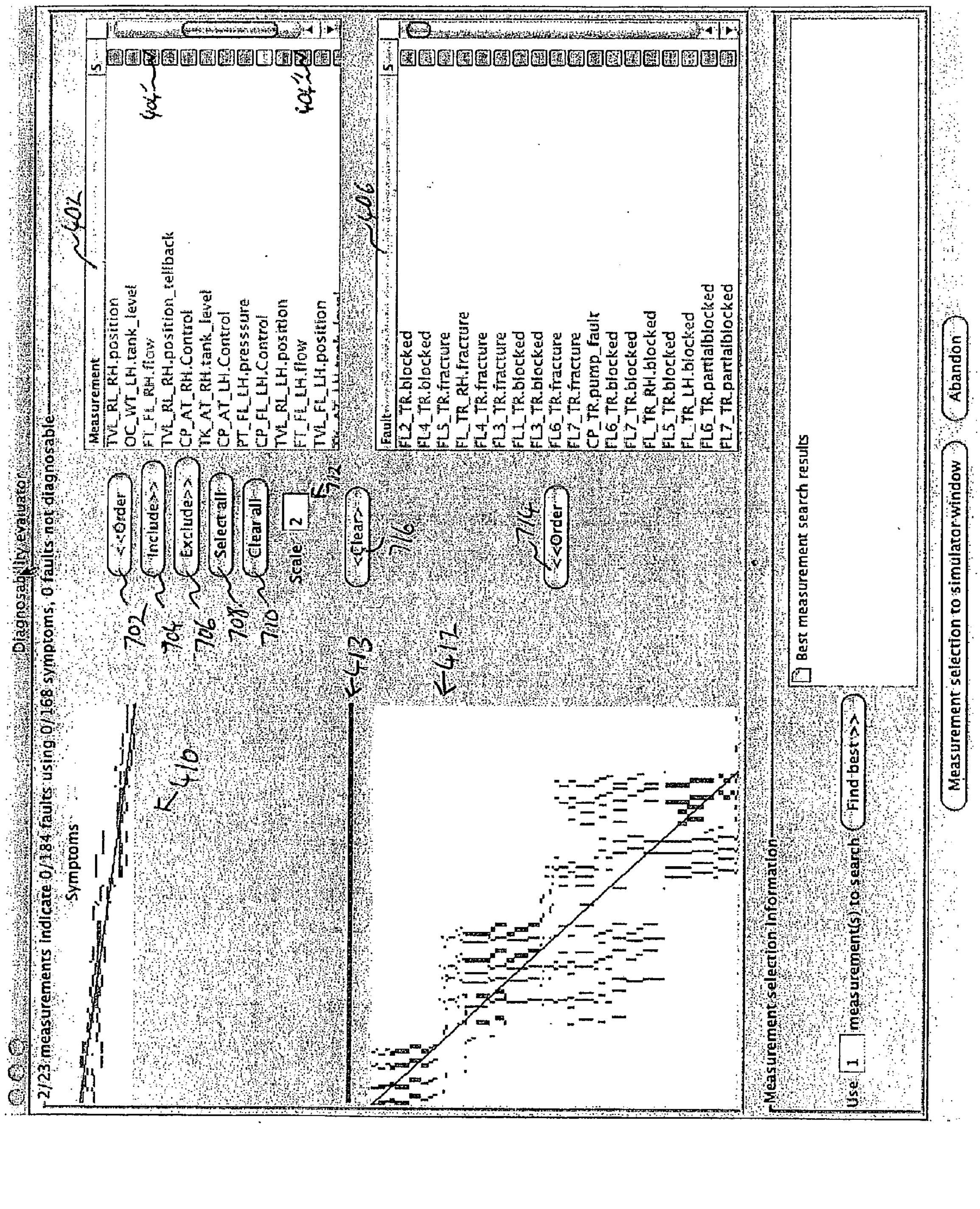
Diagnosability evaluator
2/23 measurements indicate 0/184 faults using 0/168 symptoms, 0 faults not diagnosable
Symptoms
<<Order
Include>>
Exclude>>
Select all
Clear all
Scale 2
<Clear>
<<Order
Measurement
TVL_RL_RH.position
OC_WT_LH.tank_level
FT_FL_RH.flow
TVL_RL_RH.position_tellback
CP_AT_RH.Control
TK_AT_RH.tank_level
CP_AT_LH.Control
PT_FL_LH.presssure
CP_FL_LH.Control
TVL_RL_LH.position
FT_FL_LH.flow
TVL_FL_LH.position
Fault
FL2_TR.blocked
FL4_TR.blocked
FL5_TR.fracture
FL_TR_RH.fracture
FL4_TR.fracture
FL3_TR.fracture
FL1_TR.blocked
FL3_TR.blocked
FL6_TR.fracture
FL7_TR.fracture
CP_TR.pump_fault
FL6_TR.blocked
FL7_TR.blocked
FL_TR_RH.blocked
FL5_TR.blocked
FL_TR_LH.blocked
FL6_TR.partialblocked
FL7_TR.partialblocked
Measurement selection information
Use 1 measurement(s) to search Find best>>
Best measurement search results
Measurement selection to simulator window
Abandon
702
704
706
708
710
712
714
716
410
412
413
602
604
606

FIG. 7

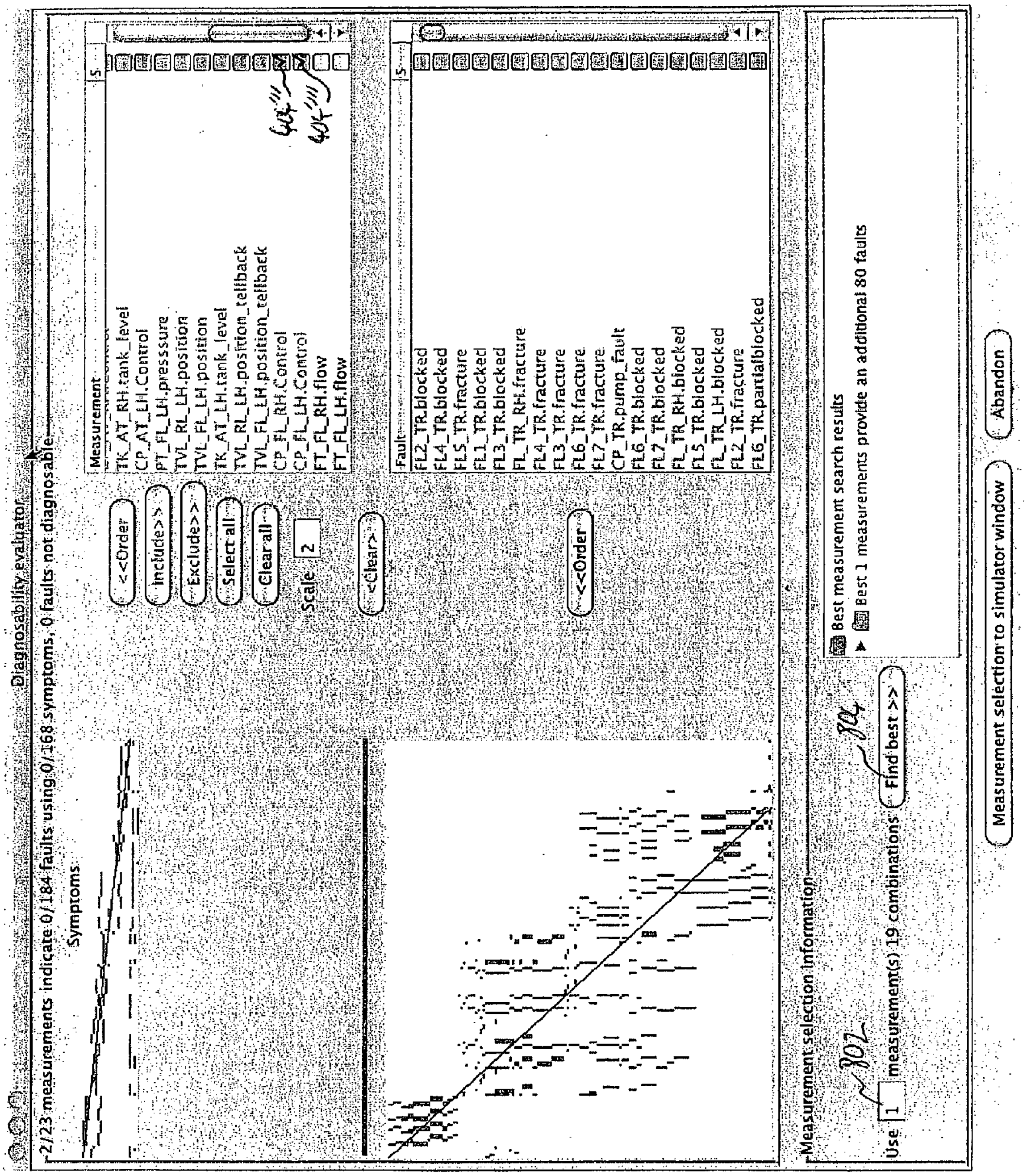
Diagnosability evaluator
2/23 measurements indicate 0/184 faults using 0/168 symptoms, 0 faults not diagnosable
Symptoms
Measurement
TK_AT_RH.tank_level
CP_AT_LH.Control
PT_FL_LH.presssure
TVL_RL_LH.position
TVL_FL_LH.position
TK_AT_LH.tank_level
TVL_RL_LH.position_tellback
TVL_FL_LH.position_tellback
CP_FL_RH.Control
CP_FL_LH.Control
FT_FL_RH.flow
FT_FL_LH.flow
S
<<Order
Include>>
Exclude>>
Select all
Clear all
Scale 2
<Clear>
<<Order
Fault
FL2_TR.blocked
FL4_TR.blocked
FL5_TR.fracture
FL1_TR.blocked
FL3_TR.blocked
FL_TR_RH.fracture
FL4_TR.fracture
FL3_TR.fracture
FL6_TR.fracture
FL7_TR.fracture
CP_TR.pump_fault
FL6_TR.blocked
FL7_TR.blocked
FL_TR_RH.blocked
FL5_TR.blocked
FL_TR_LH.blocked
FL2_TR.fracture
FL6_TR.partialblocked
S
404'''
404''''
Measurement selection information
Use 1 measurement(s) 19 combinations
Find best >>
802
804
Best measurement search results
Best 1 measurements provide an additional 80 faults
Measurement selection to simulator window
Abandon

FIG-8

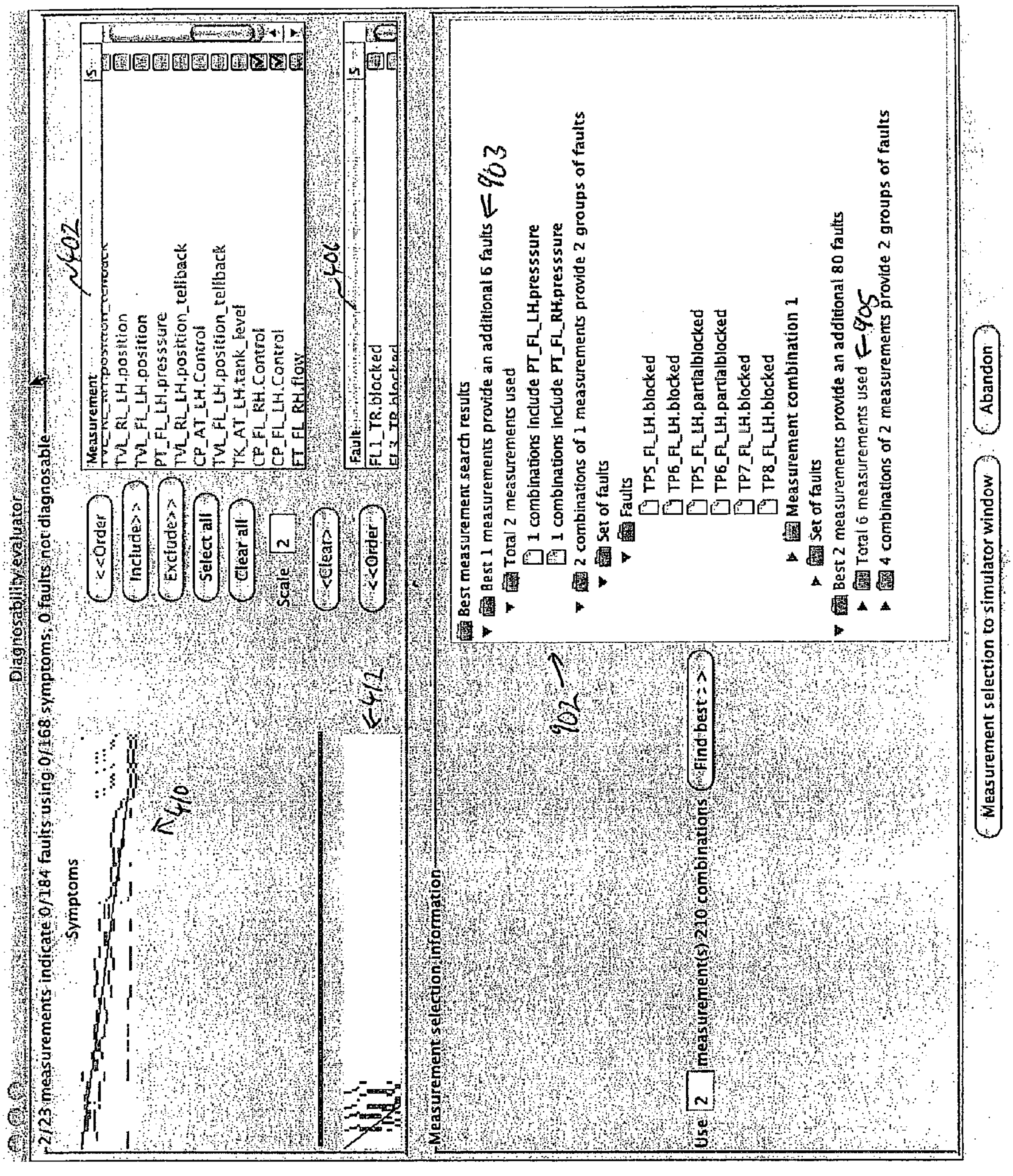
Diagnosability evaluator
2/23 measurements indicate 0/184 faults using 0/168 symptoms; 0 faults not diagnosable
Symptoms
410
412
402
406
Measurement
TVL_RL_LH.position
TVL_FL_LH.position
PT_FL_LH.presssure
TVL_RL_LH.position_tellback
CP_AT_LH.Control
TVL_FL_LH.position_tellback
TK_AT_LH.tank_level
CP_FL_RH.Control
CP_FL_LH.Control
FT_FL_RH.flow
<<Order
Include>>
Exclude>>
Select all
Clear all
Scale 2
<Clear>
<<Order
Fault
FL1_TR.blocked
Measurement selection information
Use 2 measurement(s) 210 combinations
Find best>
902
Best measurement search results
Best 1 measurements provide an additional 6 faults
903
Total 2 measurements used
1 combinations include PT_FL_LH.presssure
1 combinations include PT_FL_RH.presssure
2 combinations of 1 measurements provide 2 groups of faults
Set of faults
Faults
TP5_FL_LH.blocked
TP6_FL_LH.blocked
TP5_FL_LH.partialblocked
TP6_FL_LH.partialblocked
TP7_FL_LH.blocked
TP8_FL_LH.blocked
Measurement combination 1
Set of faults
Best 2 measurements provide an additional 80 faults
Total 6 measurements used
905
4 combinations of 2 measurements provide 2 groups of faults
Measurement selection to simulator window
Abandon

FIG. 9

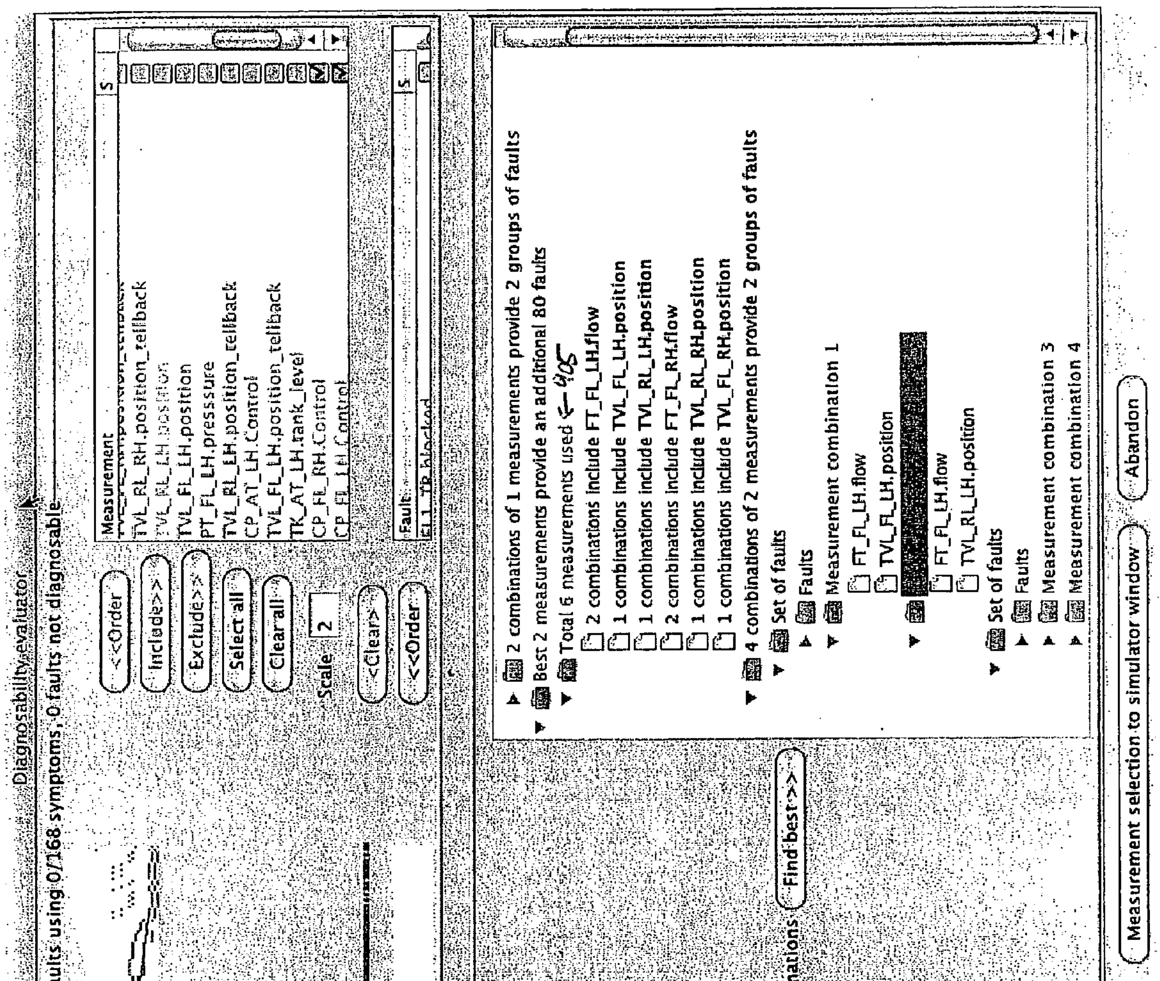
Diagnosability evaluator
2/23 measurements indicate 0/184 faults using 0/168 symptoms, 0 faults not diagnosable
Symptoms
<<Order
Include>>
Exclude>>
Select all
Clear all
Scale 2
<Clear>
<<Order
Measurement
TVL_RL_RH.position_tellback
TVL_FL_LH.position
TVL_FL_LH.position
PT_FL_LH.presssure
TVL_RL_LH.position_tellback
CP_AT_LH.Control
TVL_FL_LH.position_tellback
TK_AT_LH.tank_level
CP_FL_RH.Control
CP_FL_LH.Control
Fault
Measurement selection information
Use 2 measurement(s) 210 combinations
Find best>>
2 combinations of 1 measurements provide 2 groups of faults
Best 2 measurements provide an additional 80 faults
Total 6 measurements used
405
2 combinations include FT_FL_LH.flow
1 combinations include TVL_FL_LH.position
1 combinations include TVL_RL_LH.position
2 combinations include FT_FL_RH.flow
1 combinations include TVL_RL_RH.position
1 combinations include TVL_FL_RH.position
4 combinations of 2 measurements provide 2 groups of faults
Set of faults
Faults
Measurement combination 1
FT_FL_LH.flow
TVL_FL_LH.position
FT_FL_LH.flow
TVL_RL_LH.position
Set of faults
Faults
Measurement combination 3
Measurement combination 4
Measurement selection to simulator window
Abandon

FIG. 10

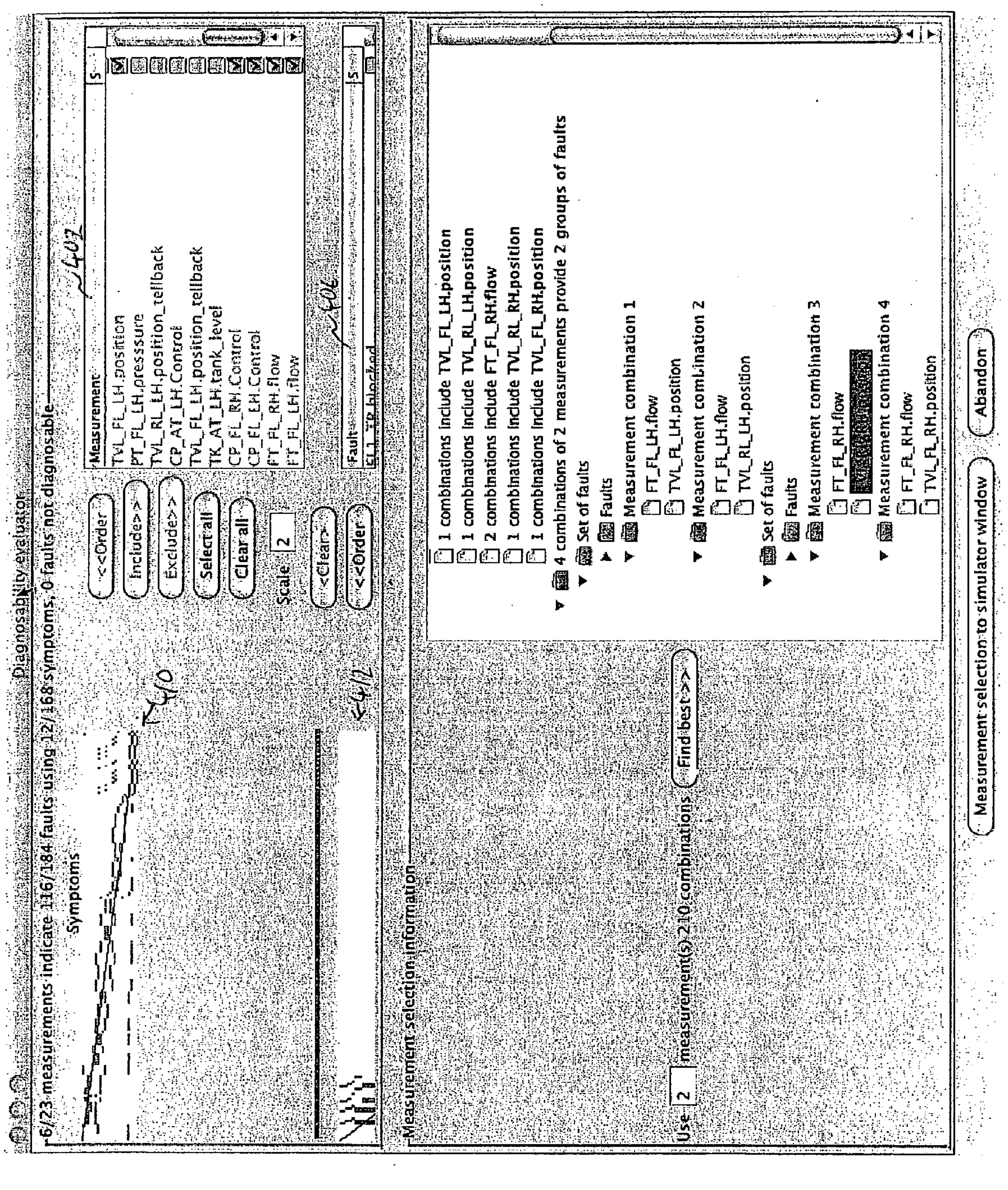
Diagnosability evaluator
6/23 measurements indicate 116/184 faults using 12/168 symptoms, 0 faults not diagnosable
Symptoms
410
412
Measurement
S
TVL_FL_LH.position
PT_FL_LH.presssure
TVL_RL_LH.position_tellback
CP_AT_LH.Control
TVL_FL_LH.position_tellback
TK_AT_LH.tank_level
CP_FL_RH.Control
CP_FL_LH.Control
FT_FL_RH.flow
FT_FL_LH.flow
402
Fault
404
<<Order
Include>>
Exclude>>
Select all
Clear all
Scale 2
<Clear>
<<Order
Measurement selection information
Use 2 measurement(s) 210 combinations
Find best>>
1 combinations include TVL_FL_LH.position
1 combinations include TVL_RL_LH.position
2 combinations include FT_FL_RH.flow
1 combinations include TVL_RL_RH.position
1 combinations include TVL_FL_RH.position
4 combinations of 2 measurements provide 2 groups of faults
Set of faults
Faults
Measurement combination 1
FT_FL_LH.flow
TVL_FL_LH.position
Measurement combination 2
FT_FL_LH.flow
TVL_RL_LH.position
Set of faults
Faults
Measurement combination 3
FT_FL_RH.flow
Measurement combination 4
FT_FL_RH.flow
TVL_FL_RH.position
Measurement selection to simulator window
Abandon

FIG. 11

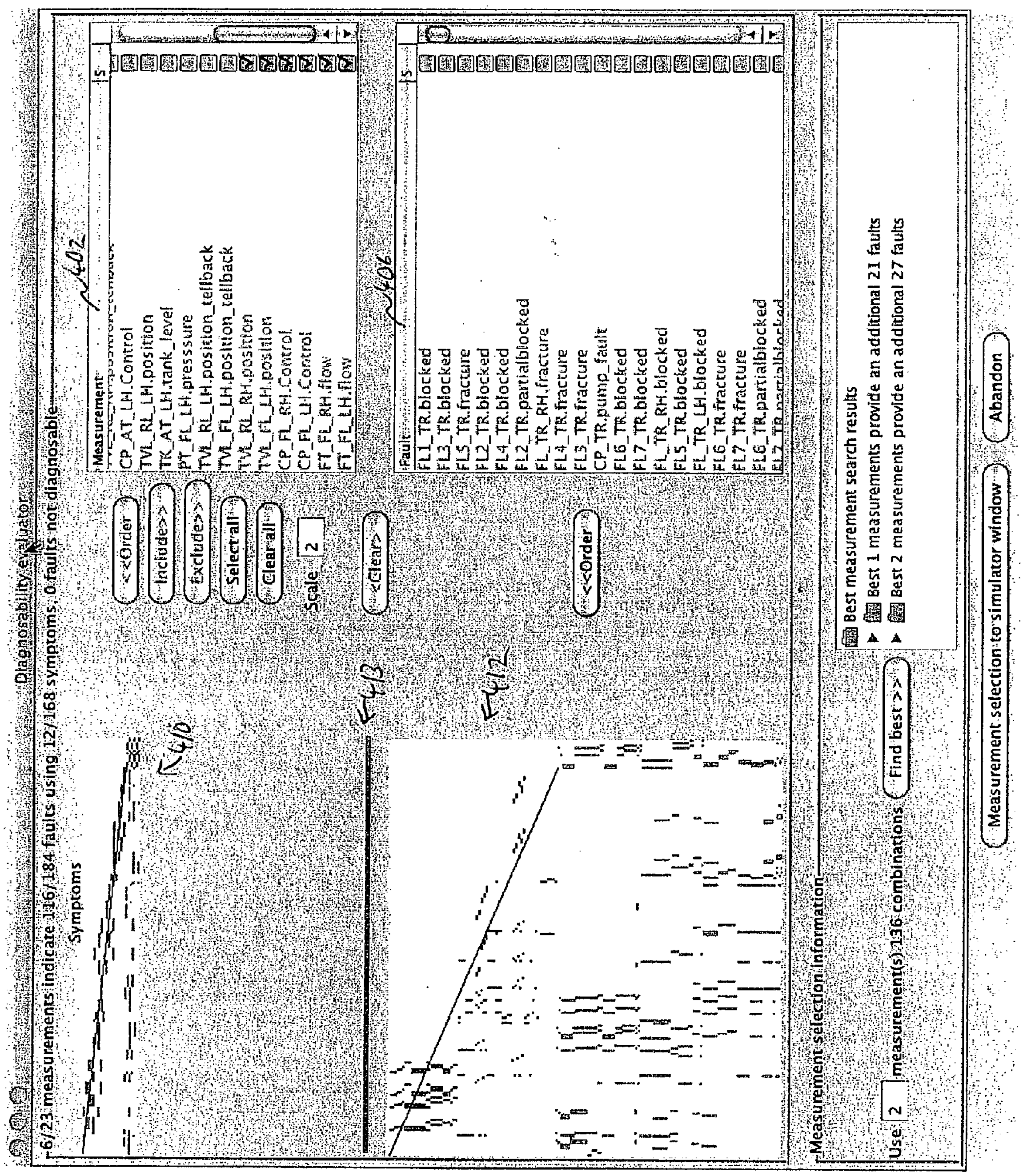
Diagnosability evaluator
6/23 measurements indicate 136/184 faults using 12/168 symptoms. 0 faults not diagnosable
Symptoms
Measurement
CP_AT_LH.Control
TVL_RL_LH.position
TK_AT_LH.tank_level
PT_FL_LH.presssure
TVL_RL_LH.position_tellback
TVL_FL_LH.position_tellback
TVL_RL_RH.position
TVL_FL_LH.position
CP_FL_LH.Control
CP_FL_RH.Control
FT_FL_RH.flow
FT_FL_LH.flow
<<Order
Include>>
Exclude>>
Select all
Clear all
Scale 2
<Clear>
<<Order
Fault
FL1_TR.blocked
FL3_TR.blocked
FL5_TR.fracture
FL2_TR.blocked
FL4_TR.blocked
FL2_TR.partialblocked
FL_TR_RH.fracture
FL4_TR.fracture
FL3_TR.fracture
CP_TR.pump_fault
FL6_TR.blocked
FL7_TR.blocked
FL_TR_RH.blocked
FL5_TR.blocked
FL_TR_LH.blocked
FL6_TR.fracture
FL7_TR.fracture
FL6_TR.partialblocked
Measurement selection information
Use 2 measurement(s): 136 combinations
Find best >>
Best measurement search results
Best 1 measurements provide an additional 21 faults
Best 2 measurements provide an additional 27 faults
Measurement selection to simulator window
Abandon

FIG. 12

Europäisches Patentamt
European Patent Office
Office européen des brevets

# EUROPEAN SEARCH REPORT

Application Number
EP 09 25 1554

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2004/225475 A1 (JOHNSON TIMOTHY LEE [US] ET AL) 11 November 2004 (2004-11-11)<br>* the whole document *<br>----- | 1-15 | INV.<br>G05B17/02<br>G05B23/02 |
| X | US 2003/195675 A1 (FELKE TIMOTHY J [US] ET AL) 16 October 2003 (2003-10-16)<br>* paragraphs [0020] - [0021] *<br>----- | 1-15 | |
| X | US 2005/138477 A1 (LIDDY RICHARD [US] ET AL) 23 June 2005 (2005-06-23)<br>* paragraphs [0038] - [0039]; figure 5 *<br>----- | 1-15 | |
| X | US 2005/028045 A1 (KAWAIKE NOBORU [JP]) 3 February 2005 (2005-02-03)<br>* paragraph [0012] *<br>* paragraph [0048]; figure 2 *<br>----- | 1-15 | |
| | | | TECHNICAL FIELDS SEARCHED (IPC) |
| | | | G05B |

The present search report has been drawn up for all claims

1

| Place of search | Date of completion of the search | Examiner |
|---|---|---|
| The Hague | 7 April 2010 | José Luis Meseguer |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO.

EP 09 25 1554

This annex lists the patent family members relating to the patent documents cited in the above-mentioned European search report.
The members are as contained in the European Patent Office EDP file on
The European Patent Office is in no way liable for these particulars which are merely given for the purpose of information.

07-04-2010

| Patent document cited in search report | Publication date | Patent family member(s) | Publication date |
|---|---|---|---|
| US 2004225475 A1 | 11-11-2004 | NONE | |
| US 2003195675 A1 | 16-10-2003 | AU 2003223569 A1 | 27-10-2003 |
| | | EP 1495384 A1 | 12-01-2005 |
| | | WO 03087967 A1 | 23-10-2003 |
| US 2005138477 A1 | 23-06-2005 | NONE | |
| US 2005028045 A1 | 03-02-2005 | CN 1573785 A | 02-02-2005 |
| | | DE 102004029222 A1 | 17-02-2005 |

EPO FORM P0459

For more details about this annex : see Official Journal of the European Patent Office, No. 12/82